# EUROPÄISCHE PATENTANMELDUNG

(11) **EP 3 996 017 A1**
(43) Veröffentlichungstag der Anmeldung: **11.05.2022**
(21) Anmeldenummer: 20206537.1
(22) Anmeldetag: 09.11.2020
(51) Int. Cl.: G06Q 10/10, G06F 16/951

(54) **VERFAHREN, SYSTEM, COMPUTER-PROGRAMM-PRODUKT UND DATENVERARBEITUNGSSYSTEM ZUM SELEKTIVEN BEREITSTELLEN UND ANREICHERN VON DATEN**

(71) Anmelder: EnBW Energie Baden-Württemberg AG, 76131 Karlsruhe (DE)
(72) Erfinder: Kehres, Harald, 76227 Karlsruhe (DE)
(74) Vertreter: RPK Patentanwälte Reinhardt, Pohlmann und Kaufmann Partnerschaft mbB

(57) **Zusammenfassung**

Die Erfindung betrifft ein computerimplementiertes Verfahren zum selektiven Bereitstellen und Anreichern von Daten, insbesondere von Informationen zu definierten Interessensgebieten, wobei Parameter (10, 12, 14) als Basis für eine Suche nach Daten definiert werden, und wobei zum Bereitstellen der Daten in einer kontinuierlich durchlaufenen Schleife wenigstens die Schritte ausgeführt werden Trainieren (S300) eines Crawlers (20) mit jeweils aktuellen Parametern (12, 14); Bereitstellen (S400) von Rohdaten (30) mittels des Crawlers (20) und strukturiertes Abspeichern der Rohdaten (30); Erzeugen (S500) von strukturierten Daten (40) aus den Rohdaten (30) anhand von Verdichtungskriterien; Bereitstellen (S600) von aufbereiteten Daten (50) aus den strukturierten Daten (40) anhand von Aufbereitungskriterien; Ablegen (S700) der aufbereiteten Daten (50) in einer Nutzerdatenbank (60); Erfassen (S800) von Feedbackdaten (70) zu den aufbereiteten Daten (50) anhand von Feedback-Kriterien; Erstellen (S900) aktualisierter Parameter (14) anhand der Feedbackdaten (70).

Die Erfindung betrifft zudem ein System (200) zum selektiven Bereitstellen und Anreichern von Daten.

## Beschreibung

### Stand der Technik

Die Erfindung betrifft ein Verfahren zum selektiven Bereitstellen und Anreichern von Daten, insbesondere von Informationen zu definierten Interessensgebieten. Die Erfindung betrifft weiter ein System zum selektiven Bereitstellen und Anreichern von Daten, insbesondere von Informationen zu definierten Interessensgebieten, sowie ein Computer-Programm-Produkt und ein Datenverarbeitungssystem zum selektiven Bereitstellen und Anreichern von Daten.

Informationen zu bestimmten Technologien und deren Entwicklung sind häufig Newslettern zu entnehmen. Newsletter werden nach relevanten Inhalten durchsucht, wobei die Inhalte verschiedener Newsletter Redundanzen aufweisen können. Zusätzlich wird üblicherweise von Empfängern der Information von Newslettern individuell nach zusätzlichen Informationen gesucht. Zum Austausch und der Abstimmung der Inhalte an Information ist Kommunikation zwischen den Empfängern erforderlich. Der Aufwand für Informationsbeschaffung und Informationsverarbeitung kann dabei beträchtlich sein.

Dieses übliche Verfahren ist mit einem nicht unerheblichen Zeitaufwand verbunden und birgt zusätzlich immer die Unsicherheit, ob nicht neben den Informationen aus den Newslettern weitere, relevante Information an anderer Stelle veröffentlicht wird (z.B. in Fachforen, Veröffentlichungen von Studien, etc.) und daher nicht in die Informationsbeschaffung eingeht.

Bei der Informationsbereitstellung in derzeit üblichen Verfahren werden zur Ablage und Nutzbarmachung von individuell empfangenen Informationen (z.B. Newsletter, etc.) individuelle Strukturen in Form von hierarchischen Baumstrukturen, Ordnern und Unterordnern in Datenablagen geschaffen. Die individuelle Ablage auf persönlichen Strukturen mit entsprechender Zugangsberechtigung ist dabei für eine Gruppe von Empfängern aufwendig zu verwalten. Informationen, die nach dem Push-Prinzip bei den jeweiligen Empfängern eintreffen, stellen nicht nur eine ineffiziente Datenflut dar, sondern erfordern auch in der weiteren Strukturierung und Bearbeitung einen ggf. signifikanten Aufwand.

### Offenbarung der Erfindung

Die Aufgabe der Erfindung ist es, ein effizientes speicherplatzschonendes Verfahren zum selektiven Bereitstellen und Anreichern von Daten, insbesondere von Informationen zu definierten Interessensgebieten, zu schaffen.

Eine weitere Aufgabe ist es, ein System für ein solches effizientes speicherplatzschonendes Verfahren zum selektiven Bereitstellen und Anreichern von Daten zu schaffen.

Eine weitere Aufgabe ist es, ein Computer-Programm-Produkt und ein Datenverarbeitungssystem zur Ausführung eines solchen Verfahrens zum selektiven Bereitstellen und Anreichern von Daten zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird ein computerimplementiertes Verfahren zum selektiven Bereitstellen und Anreichern von Daten vorgeschlagen, insbesondere von Informationen zu definierten Interessensgebieten, wobei Parameter als Basis für eine Suche nach Daten definiert werden, und wobei zum Bereitstellen der Daten in einer kontinuierlich durchlaufenen Schleife wenigstens die Schritte ausgeführt werden: (i) Trainieren eines Crawlers mit jeweils aktuellen Parametern; (ii) Bereitstellen von Rohdaten mittels des Crawlers und strukturiertes Abspeichern der Rohdaten; (iii) Erzeugen von strukturierten Daten aus den Rohdaten anhand von Verdichtungskriterien; (iv) Bereitstellen von aufbereiteten Daten aus den strukturierten Daten anhand von Aufbereitungskriterien; (v) Ablegen der aufbereiteten Daten in einer Nutzerdatenbank; (vi) Erfassen von Feedbackdaten zu den aufbereiteten Daten anhand von Feedback-Kriterien; (vii) Erstellen aktualisierter Parameter anhand der Feedbackdaten.

Mit Hilfe des erfindungsgemäßen Verfahrens ist es möglich, relevante Informationen zu definierten Interessensgebieten weitgehend redundanzfrei für eine Personengruppe bereitzustellen und diese Informationen kontinuierlich in Beziehung zu Folgeinformationen zu bringen, sowie nutzbare Attribute für die Informationen zu generieren. Empfänger kann dabei vorteilhaft eine Gruppe von Personen sein und nicht eine oder mehrere Personen aus der Gruppe. Die Bereitstellung und weitere Anreicherung der Informationen kann dabei sowohl im Datenraum der Personengruppe als auch extern über zum Beispiel einen Cloud-Service stattfinden. Beide Ausführungsformen stellen Vorteile der Erfindung dar.

Das Verfahren kann günstigerweise entweder durch interne Ressourcen eines Unternehmens oder als Dienstleistung durch Dritte ausgeführt werden.

Anders als im Stand der Technik bekannt, wo die Informationen üblicherweise gesendet und empfangen werden, unabhängig von Form oder Medium, jedoch im Rahmen der Lieferung keine Kopplung und Auswertung der empfangenen Informationen bezüglich Informationen, die zu einem früheren Zeitpunkt empfangen wurden, stattfindet, ist eine solche Kopplung vorgesehen. Daher kann vermieden werden, dass die Empfänger der Information aufwendig manuell prüfen und bewerten müssen, ob die gleiche Information möglicherweise bereits über verschiedene Kanäle und ggf. zu verschiedenen Zeitpunkten redundant empfangen wurde und ob die Information tatsächlich neu, relevant, redundant oder sachlich zugehörig ist.

Daten können in einer jeweils geeigneten Struktur speicherplatzschonend abgelegt sein. Diese kann vom Thema, Gebiet und dergleichen abhängig sein. Beispielsweise können Daten in einer Struktur hierarchisch themenorientiert strukturiert abgelegt sein.

Vorteilhaft kann zum Bereitstellen der Rohdaten ein sogenannter Crawler oder Web Crawler eingesetzt werden. Ein Web Crawler ist ein Computerprogramm, das automatisch das World Wide Web durchsucht und Webseiten analysiert. Web Crawler werden vor allem von Suchmaschinen zur Indexierung von Webseiten eingesetzt. Weitere Anwendungen sind das Sammeln von Web-Feeds, E-Mail-Adressen oder von anderen Informationen. Web Crawler sind eine spezielle Art von Bots, also Computerprogrammen, die weitgehend automatisch sich wiederholenden Aufgaben nachgehen.

Ein Web Crawler, häufig auch als Searchbot oder Suchbot bezeichnet, gelangt über Hyperlinks von einer Webseite zu weiteren URLs. Dabei werden alle aufgefundenen Adressen gespeichert und der Reihe nach besucht. Die neu gefundenen Hyperlinks werden zur Liste aller URLs hinzugefügt. Auf diese Weise können verlinkte Seiten des Word Wide Web gefunden werden.

Je nach Aufgabe des Web Crawlers kann der Inhalt der gefundenen Webseiten beispielsweise mittels Indexierung ausgewertet und gespeichert werden, um ein späteres Suchen in den so gesammelten Daten zu ermöglichen.

Vorteilhaft kann so nach dem erfindungsgemäßen Verfahren eine Kopplung und Auswertung der empfangenen Informationen bezüglich Informationen, die zu einem früheren Zeitpunkt empfangen wurden, stattfinden. Information aus verschiedenen Kanälen, die möglicherweise zu verschiedenen Zeitpunkten redundant empfangen wurde, kann so zweckmäßigerweise geprüft werden, ob die Information tatsächlich neu, relevant, redundant oder sachlich zugehörig ist oder ob diese nicht schon einer bereits empfangenen Information entspricht.

Zur Ablage und Nutzbarmachung der empfangenen Informationen kann die Information automatisch strukturiert und aufbereitet in geeigneten Datenstrukturen und Archiven abgelegt werden. Feedbackdaten können geeignet generiert werden, welche es ermöglichen, zukünftige Suchanfragen effektiver und zielgerichteter zu gestalten. Das Bereitstellen von Information kann in verdichteter Form erfolgen, sodass auch die Auswertung der Datenstrukturen effizient durchgeführt werden kann.

Nach einer günstigen Ausgestaltung des Verfahrens können die Aufbereitungskriterien mit den Feedbackdaten aktualisiert werden. Anhand von aktuell aufgenommenen Feedbackdaten können so die Daten beim nächsten Durchlaufen der Schleife zum Bereitstellen und Anreichern der Daten zielgerichteter aufbereitet und zur Verfügung gestellt werden.

Nach einer günstigen Ausgestaltung des Verfahrens können die aufbereiteten Daten beim Erzeugen strukturierter Daten mit neuen Rohdaten verknüpft werden. Dadurch ist es möglich, bereits empfangene Daten mit neuen Informationen zu verknüpfen, sodass das Bereitstellen strukturierter Daten mit bereits vorliegenden Informationen angereichert und effektiver gestaltet werden kann.

Nach einer günstigen Ausgestaltung des Verfahrens können die strukturierten Daten Datensätze umfassen, welche wenigstens einen Inhalt und wenigstens ein Attribut aufweisen. Zur Verarbeitung in dem erfindungsgemäßen Verfahren sind Datensätze vorgesehen, die einen Inhalt und Attribute enthalten. Die Attribute sind aus der Identifikation der Treffer der Datenbeschaffung (beispielsweise URL, Herkunft, Zeitpunkt, Format, etc.) oder aus den Metadaten des Inhalts (beispielsweise Thema, Autor, Schlüsselworten, etc.) befüllt. Der Inhalt besteht aus Text und gegebenenfalls aus Bildern oder Videos. Mehrfach, beispielsweise über unterschiedliche Portale, veröffentlichte Artikel können redundant vorhanden sein. Gegebenenfalls sind semantisch gleiche Artikel textuell unterschiedlich (gekürzt, ergänzt, etc.).

Nach einer günstigen Ausgestaltung des Verfahrens kann zum Definieren von Parametern für die Suche nach Daten wenigstens einer der Schritte ausgeführt werden: (i) Festlegen eines Interessensgebiets; (ii) Festlegen wenigstens eines Schlüsselworts; (iii) Festlegen wenigstens einer Quellenart; (iv) Festlegen wenigstens eines Attributs; (v) Festlegen wenigstens eines Zeitpunkts und/oder wenigstens eines Turnus; (vi) Festlegen wenigstens einer Zieladresse und/oder wenigstens eines Datenraums.

Zunächst kann das fachliche Gebiet definiert werden, zu dem Informationen bereitgestellt werden sollen. Dabei kann eine Eingrenzung durch Ausschluss von dezidiert nicht relevanten Aspekten erfolgen.

Danach können Schlüsselworte zum Interessensgebiet definiert werden, nach denen gesucht werden soll. Es kann eine Ergänzung / Verknüpfung der Schlüsselworte durch logische Operatoren (OR, AND, NOT, etc.) und weitere Merkmale erfolgen, wie zum Beispiel die Konstellation der Schlüsselworte im Text.

Weiter kann eine Festlegung erfolgen, welche Quellen genutzt werden sollen, sowie eine Festlegung auf nationale Herkunft, Sprache(n), und Art der Quelle (z.B. Nachrichtenagentur, Universität, Fachforum, Unternehmen, etc.). Es kann bestimmt werden, welche Art von Information wie ausgewertet und ggf. umgewandelt werden soll (z.B. Text, Bild, Ton, Video als Quellen und ggf. durch Texterkennung aus Bildinformation oder Spracherkennung aus Audio / Video - Information zum Text). Gegebenenfalls können Dateiformate bei Quellen ebenfalls festgelegt werden.

Es kann festgelegt werden, welche Attribute zu den Informationen erfasst und angezeigt werden sollen. Dies können zum Beispiel Attribute wie Neuheit, Anzahl der Veröffentlichungen, Dauer der Veröffentlichungen zu einem Thema, Länder der Veröffentlichungen, Quelltypen, Feedbackinformationen, etc. sein. Es sind jedoch nur Attribute möglich, die sich aus der Auswertung der Quellen, der Information selbst, dem Abgleich mit bereits erfassten Informationen oder dem Feedback befüllen lassen.

Weiter kann festgelegt werden, ab wann und wie oft (z.B. live, in einer Turnusabfrage, mit einem manuellen Trigger, etc.) nach Informationen gesucht werden soll und zu welchen Zeitpunkten die Aufbereitung und Bereitstellung der Informationen erfolgen soll.

Schließlich kann festgelegt werden, wie die Ergebnisse an welche Zielstruktur übertragen werden sollen. In der Zielstruktur können zweckmäßigerweise Informationen und Attribute hinzugefügt und aktualisiert werden. Zugleich kann die für das Feedback notwendige Übermittlung definiert und eingerichtet werden. Als geeignete Zielarchitektur für den strukturierten Datenaustausch, Kommunikation (intern und extern) und Feedback kann zum Beispiel ein Kommunikationswerkzeug wie Microsoft Teams dienen, da hier auch die Möglichkeit besteht, zusätzliche Applikationen zu integrieren.

Nach einer günstigen Ausgestaltung des Verfahrens kann zum Erzeugen von strukturierten Daten aus den Rohdaten anhand von Verdichtungskriterien wenigstens einer der Schritte ausgeführt werden: (i) Erkennen von Häufungen; (ii) Auflösen von Redundanzen; (iii) Füllen der Attribute; (iv) Zuordnen von Metadaten; (v) Erkennen von Verwandtschaften; (vi) Festlegen wenigstens einer Zielstruktur.

Auf Basis einer Textanalyse kann so ermittelt werden, ob eine Meldung über mehrere Kanäle verbreitet wird, beispielsweise, ob die Information nur aus einer Quelle stammt, oder ob diese bereits über mehrere Quellen bereitgestellt wird. Es kann eine Auswertung der Häufungen nach Anzahl und Herkunft erfolgen. Die Auswertungsergebnisse können in die Attributierung transferiert werden.

Weiter kann eine Auflösung der Redundanz inhaltsgleicher Informationen erfolgen. Gleiche Meldungen werden also nicht mehrfach an den Empfängerkreis übermittelt, sondern nur einmal, dafür allerdings versehen mit den Attributen aus der Auswertung von Häufungen. Die Auflösung der Redundanzen kann im Ergebnistyp über die Erzeugung eines neuen Textblocks auf Basis der Textauswertung erfolgen. Verfahrensseitig können also Informationen, die über ein Crawling gefunden werden, in neue Dateien (beispielsweise Text) konvertiert und dabei auch die Möglichkeiten einer maschinellen Übersetzung und einer Text-aus-Bild - Auswertung genutzt werden.

Vorteilhaft können für den Nutzer sichtbare Attribute befüllt werden.

Weiter können intern benötigte, aber für den Nutzer nicht sichtbare Metadaten zugeordnet werden.

Inhaltlich in Beziehung stehende Themen können analysiert und detektiert werden. Dies kann über Schlüsselworte im Sinne von Kategorien oder Eigennamen von Technologie oder Produkten erfolgen. Hier kann auch der Einbezug von aufbereiteten Daten von Bedeutung sein, da auch über den Zeitverlauf eine Zugehörigkeit erkannt werden kann.

Vorteilhaft kann dann festgelegt werden, an welchen Ort in einer Zielstruktur die Information auf Grund ihrer Eigenschaften (Attribute und Metadaten) transportiert werden soll.

Nach einer günstigen Ausgestaltung des Verfahrens kann zum Bereitstellen von aufbereiteten Daten aus den strukturierten Daten wenigstens einer der Schritte ausgeführt werden: (i) Übermitteln der Daten an die wenigstens eine Zielstruktur; (ii) Aktualisieren von Beziehungen; (iii) Erzeugen einer Zusammenfassung; (iv) Erzeugen einer Push-Nachricht; (v) Aktualisieren der Attribute.

Vorteilhaft können die beschafften Daten an eine Zielstruktur übermittelt werden.

Sodann kann eine Beziehung von Informationen innerhalb der Zielstruktur aktualisiert werden.

Eine Zusammenfassung mit Informationen, welche Informationen mit den wesentlichen Attributwerten neu hinzugekommen sind und wie sich bestehende Attributwerte verändert haben, kann erzeugt werden.

Optional kann, falls die Information innerhalb der Zielstruktur, wann zuletzt aktualisiert wurde, nicht ausreichend ist, eine Push-Nachricht an die Mitglieder der Gruppe übermittelt werden.

Schließlich können die Attribute in den aufbereiteten Daten aktualisiert werden mit den Werten aus den neu erhobenen Daten. Dies kann dazu führen, dass bereits bekannte Informationen (aufbereitete Daten) nicht erneut übertragen werden (Redundanzvermeidung), sondern ggf. nur Attributwerte aktualisiert werden.

Beispielsweise wurde bei der letzten Datenübermittlung eine Information bereits übertragen, sodass in dem Attributwert "Anzahl Quellen" "1" eingetragen war, da diese Information zu diesem Zeitpunkt nur von einer Quelle veröffentlicht war. Mittlerweile ist die Information auch aus anderen Quellen verfügbar, deshalb kann eine Änderung des Attributwerts nun auf größer 1 erfolgen. Die Werte aus dem Feedback (z.B. durch Nutzerbewertung) können laufend aktualisiert werden. Die erhaltenen Feedbackdaten können zweckmäßigerweise als Trigger für die Aktualisierung der Attribute dienen.

Nach einer günstigen Ausgestaltung des Verfahrens kann zum Erfassen von Feedbackdaten zu den aufbereiteten Daten anhand von Feedbackkriterien wenigstens einer der Schritte ausgeführt werden: (i) Bewerten von Daten, insbesondere Informationen; (ii) Vorschlagen von Verwandtschaften; (iii) Vorschlagen neuer Such-Kriterien; (iv) Vorschlagen neuer Quellenarten; (v) Anreichern interner Kommunikation.

Eine Bewertung der bereitgestellten Informationen kann vorteilhaft durch den Nutzer erfolgen. Die Bewertung kann zweckmäßigerweise durch vordefinierte Werte erfolgen und ggf. mit Freitext ergänzt werden.

Eine Verwandtschaftsbeziehung kann durch den Nutzer vorgeschlagen werden. Der Vorschlag kann dann für die Konfiguration eines für die Beschaffung der Daten eingesetzten Crawlers und die Optimierung des Beziehungsmodells genutzt werden.

Neue Such-Kriterien können durch den Nutzer vorgeschlagen werden. Der Vorschlag kann dann für die Konfiguration eines für die Beschaffung der Daten eingesetzten Crawlers und die Optimierung des Beziehungsmodells genutzt werden.

Neue Quellenarten (z.B. Nachrichtenagenturen, Forschungsinstitute, neue Websites von Projekten, etc.) können durch den Nutzer vorgeschlagen werden. Der Vorschlag kann dann für die Konfiguration eines für die Beschaffung der Daten eingesetzten Crawlers und die Optimierung des Beziehungsmodells genutzt werden.

Interne Kommunikation innerhalb der Zielstruktur zu den empfangenen Informationen kann angereichert werden. Als eine geeignete Applikation, welche einen strukturierten Informationsempfang und Kommunikation am gleichen Ort zulässt, kann beispielsweise eine Kommunikationssoftware wie Microsoft Teams eingesetzt werden.

Nach einer günstigen Ausgestaltung des Verfahrens kann die kontinuierlich durchlaufene Schleife zum Bereitstellen der Daten mit den Schritten Trainieren eines Crawlers, Bereitstellen von Rohdaten, Erzeugen von strukturierten Daten, Bereitstellen von aufbereiteten Daten, Ablegen der aufbereiteten Daten, Erfassen von Feedbackdaten, Erstellen aktualisierter Parameter automatisiert durchlaufen werden. Die automatisierte Ausführung des erfindungsgemäßen Verfahrens ermöglicht eine kontinuierliche Bereitstellung und Pflege von Informationen in einer Nutzerdatenbank, ohne dass manuelle Eingriffe erforderlich sind.

Nach einer günstigen Ausgestaltung des Verfahrens kann das Gewinnen von wenigstens einem der Kriterien Verdichtungskriterium, Aufbereitungskriterium, Feedback-Kriterium wenigstens teilweise automatisiert durchgeführt werden. Die automatisierte Ausführung des erfindungsgemäßen Verfahrens ermöglicht eine kontinuierliche Bereitstellung und Pflege von Informationen in einer Nutzerdatenbank, ohne dass manuelle Eingriffe erforderlich sind.

Nach einer günstigen Ausgestaltung des Verfahrens kann durch wenigstens einen der Schritte zum Erfassen von Feedbackdaten eine Eingabeaufforderung ausgelöst werden. Mittels einer Eingabeaufforderung können beispielsweise Feedbackdaten wie Bewertungen erhaltener Information oder Zusammenhänge, welche von Nutzern bereitgestellt werden, in die Aufbereitung der Daten einfließen.

Nach einer günstigen Ausgestaltung des Verfahrens kann der Crawler auf wenigstens einer Methode maschinellen Lernens, insbesondere einer Methode von wenigsten einem Neuronalen Netz, einem Entscheidungsbaum, Support Vector Machines basieren.

Methoden maschinellen Lernens können bevorzugt bei Verfahren, bei denen eine Rückkopplung zwischen der gelieferten Information und dem Nutzerverhalten stattfindet, günstig eingesetzt werden. Insbesondere ein Zusammenwirken von Methoden maschinellen Lernens mit Nutzereingaben oder Feedback kann eine Verdichtung gefundener Daten mit für den Nutzer relevanten Inhalten vorteilhaft ermöglichen.

Nach einem weiteren Aspekt der Erfindung wird ein System zum selektiven Bereitstellen und Anreichern von Daten, insbesondere von Informationen zu definierten Interessensgebieten, vorgeschlagen, wobei Parameter als Basis für eine Suche nach Daten definiert sind, wenigstens umfassend (i) einen Crawler zum Bereitstellen von Rohdaten mittels jeweils aktueller Parameter; (ii) ein erstes Modul zum Extrahieren von strukturierten Daten aus den Rohdaten; (iii) ein zweites Modul zum Aufbereiten der strukturierten Daten zu aufbereiteten Daten; (iv) ein drittes Modul zum Ablegen der aufbereiteten Daten in eine Nutzerdatenbank; (v) ein viertes Modul zum Erfassen von Feedbackdaten aus den aufbereiteten Daten und Erstellen aktualisierter Parameter anhand der Feedbackdaten.

Mit Hilfe des erfindungsgemäßen Systems ist es möglich, relevante Informationen zu definierten Interessensgebieten möglichst redundanzfrei für eine Personengruppe bereitzustellen und diese Informationen kontinuierlich in Beziehung zu Folgeinformationen zu bringen, sowie nutzbare Attribute für die Informationen zu generieren.

Vorteilhaft kann zum Bereitstellen der Rohdaten ein sogenannter Crawler oder Web Crawler eingesetzt werden. Mit dem erfindungsgemäßen System kann so eine Kopplung und Auswertung der empfangenen Informationen bezüglich Informationen, die zu einem früheren Zeitpunkt empfangen wurden, stattfinden. Information aus verschiedenen Kanälen, die möglicherweise zu verschiedenen Zeitpunkten redundant empfangen wurde, kann so zweckmäßigerweise geprüft werden, ob die Information tatsächlich neu, relevant, redundant oder sachlich zugehörig ist oder ob diese nicht schon einer bereits empfangenen Information entspricht.

Zur Ablage und Nutzbarmachung der empfangenen Informationen kann die Information automatisch strukturiert und aufbereitet in geeigneten Datenstrukturen und Archiven abgelegt werden. Feedbackdaten können geeignet generiert werden, welche es ermöglichen, zukünftige Suchanfragen effektiver und zielgerichteter zu gestalten. Das Bereitstellen von Information kann in verdichteter Form erfolgen, sodass auch die Auswertung der Datenstrukturen effizient durchgeführt werden kann.

Nach einer günstigen Ausgestaltung des Systems können die strukturierten Daten im zweiten Modul Datensätze umfassen, welche wenigstens einen Inhalt und wenigstens ein Attribut aufweisen. Zur Verarbeitung in dem erfindungsgemäßen System sind Datensätze vorgesehen, die einen Inhalt und Attribute enthalten.

Die Attribute sind aus der Identifikation der Treffer der Datenbeschaffung (beispielsweise URL, Herkunft, Zeitpunkt, Format, etc.) oder aus den Metadaten des Inhalts (beispielsweise Thema, Autor, Schlüsselworte, etc.) befüllt. Der Inhalt besteht aus Text und ggf. aus Bildern oder Videos. Mehrfach (z.B. über unterschiedliche Portale) veröffentlichte Artikel können redundant vorhanden sein. Gegebenenfalls sind semantisch gleiche Artikel textuell unterschiedlich (gekürzt, ergänzt, etc.).

Nach einer günstigen Ausgestaltung des Systems kann das erste Modul dazu ausgebildet sein, wenigstens die Funktionen auszuführen (vi) Texterkennung durchführen; (vii) Textanalyse durchführen; (viii) Filtern von Daten; (ix) Kombinieren von Datensätzen; (x) Attribute füllen.

Das erste Modul dient dazu, aus den Rohdaten die wesentlichen Informationen zu extrahieren, sodass diese in geeigneter Weise aufbereitet und angereichert werden können. Attribute aus den Datensätzen können in Form von Listen, Anzahl, Verteilung, etc. extrahiert werden.

Nach einer günstigen Ausgestaltung des Systems kann das zweite Modul dazu ausgebildet sein, wenigstens die Funktionen auszuführen (xi) Zählen eines Auftretens; (xii) Verdichten von Daten; (xiii) Zuordnen von Beziehungen; (xiv)) Bewerten von Daten; (xv) Textanalyse durchführen; (xvi) Schlüsselworte festlegen; (xvii) Vergleichsoperationen durchführen; (xviii) Reduzieren von Daten.

Mit dem zweiten Modul können in einem ersten Prozessschritt die Inhalte der Datensätze mittels Abgleich / Textanalyse mit Werkzeugen nach dem Stand der Technik verglichen und auch Gemeinsamkeiten in den Metadaten gesucht werden.

In einem nächsten Prozessschritt können dann Redundanzen aufgelöst und die Attribute aus den Datensätzen zusammengeführt werden. Dabei wird nur der Inhalt mit der höchsten Relevanz, welcher variabel definiert werden kann, behalten, die Attribute jedoch in Form von Listen, Anzahl, Verteilung, etc. zusammengeführt. Die Anzahl der Treffer kann in einem weiteren Attribut erfasst werden.

In einem nächsten Prozessschritt können die konsolidierten Datensätze auf Gemeinsamkeiten untersucht werden, die eine inhaltliche Beziehung wahrscheinlich machen. Hier zählt nicht die semantische Übereinstimmung des Inhalts, sondern die Übereinstimmung von einzelnen Begrifflichkeiten wie Erfinder, Firma, Technologie, etc.. Dafür kann vorteilhaft eine Textanalyse, basierend auf Methoden maschinellen Lernens, eingesetzt werden, die Füllwörter und Begriffe aus dem alltäglichen Sprachgebrauch ignoriert und sich im Wesentlichen auf Substantive mit wahrscheinlicher Relevanz konzentriert. Im Ergebnis liegen dann zu den jeweiligen Datensätzen Schlüsselworte vor, aus deren Übereinstimmungsgrad eine Beziehungswahrscheinlichkeit dargestellt und als weiteres Attribut dem jeweiligen Datensatz hinzugefügt werden kann. Vorschläge der Nutzer bezüglich Relation können dabei mit einer vorgegebenen Gewichtung in die Berechnung einbezogen werden. Dies gilt auch für ein negatives Feedback der Nutzer, d.h. eine berechnete Wahrscheinlichkeit kann auch reduziert werden.

In einem weiteren Prozessschritt kann eine Bewertung der Datensätze durchgeführt werden. Dazu können unterschiedliche Analyseverfahren und Gewichtungsprioritäten genutzt werden. Derartige Verfahren, bzw. Algorithmen sind Stand der Technik.

Naheliegende Bewertungsverfahren sind Vergleiche von Trefferzahlen, Anzahl von Treffern innerhalb eines Zeitraums, Übereinstimmungsquote mit den Suchbegriffen, etc. Das Feedback der Nutzer kann dabei vorzugsweise als Input für die Relevanzbewertung genutzt werden.

Nach einer günstigen Ausgestaltung des Systems kann das dritte Modul dazu ausgebildet sein, wenigstens die Funktionen auszuführen (xix) Neue Inhalte senden; (xx) Neue Attribute senden.

In einem nächsten Prozessschritt kann nun der Transport der aufbereiteten und angereicherten Datensätze in eine Zielstruktur durchgeführt werden. Dieser Transport erfolgt immer dann, wenn ein Crawling mit den anschließenden Prozessschritten durchgeführt wurde oder sich durch prozessimmanente Iteration neue Werte für Attribute ergeben. Übertragen wird vorteilhaft nur die Differenz zur bereits zuvor erfolgten Übertragung. Konkret kann dies bedeuten, dass ggf. nur Attributwerte von Datensätzen aktualisiert werden.

Nach einer günstigen Ausgestaltung des Systems kann das vierte Modul dazu ausgebildet sein, wenigstens die Funktionen auszuführen (xxi) Präsentieren; (xxii) Feedback einholen; (xxiii) Botschaft senden.

Mit dem vierten Modul können die aufbereiteten und angereicherten Daten dem Nutzer präsentiert werden. Dabei kann Feedback nach den aktuellen Feedbackkriterien eingeholt werden. Weiter können Botschaften gesendet werden. Anhand der Feedbackdaten können aktualisierte Parameter generiert werden, welche dann wieder als Eingabe für den Crawler dienen.

Nach einem weiteren Aspekt der Erfindung wird ein Computer-Programm-Produkt zum selektiven Bereitstellen und Anreichern von Daten vorgeschlagen, wobei das Computer-Programm-Produkt wenigstens ein computerlesbares Speichermedium umfasst, welches Programmbefehle umfasst, die auf einem Computersystem ausführbar sind und das Computersystem dazu veranlassen, ein Verfahren wie vorstehend beschrieben auszuführen, wobei Parameter als Basis für eine Suche nach Daten definiert werden, und wobei zum Bereitstellen der Daten in einer kontinuierlich durchlaufenen Schleife wenigstens die Schritte ausgeführt werden (i) Trainieren eines Crawlers mit jeweils aktuellen Parametern; (ii) Bereitstellen von Rohdaten mittels des Crawlers und strukturiertes Abspeichern der Rohdaten; (iii) Erzeugen von strukturierten Daten aus den Rohdaten anhand von Verdichtungskriterien; (iv) Bereitstellen von aufbereiteten Daten aus den strukturierten Daten anhand von Aufbereitungskriterien; (v) Ablegen der aufbereiteten Daten in einer Nutzerdatenbank; (vi) Erfassen von Feedbackdaten zu den aufbereiteten Daten anhand von Feedback-Kriterien; (vii) Erstellen aktualisierter Parameter anhand der Feedbackdaten.

Das Computerprogrammprodukt umfasst direkt in den Speicher eines digitalen Computers ladbare Softwarecodeabschnitte, mit denen das Verfahren ausgeführt wird, wenn die Softwarecodeabschnitte von dem Computer ausgeführt werden.

Das Computerprogrammprodukt kann durch ein Computerprogramm gebildet sein oder neben dem Computerprogramm mindestens einen zusätzlichen Bestandteil umfassen. Der mindestens eine zusätzliche Bestandteil kann als Hardware und/oder als Software ausgebildet sein.

Ein Beispiel für den mindestens einen zusätzlichen Bestandteil, der als Hardware ausgebildet ist, ist ein Speichermedium, das von dem digitalen Computer lesbar ist und/oder auf dem die Softwarecodeabschnitte gespeichert sind.

Ein Beispiel für den mindestens einen zusätzlichen Bestandteil, der als Software ausgebildet ist, ist ein Cloud-Anwendungs-Programm, welches zum Verteilen der Softwarecodeabschnitte auf verschiedene Verarbeitungseinheiten, insbesondere verschiedene Computer, eines Cloud-Computing-Systems ausgebildet ist, wobei jede der Verarbeitungseinheiten zum Ausführen eines oder mehrerer Softwarecodeabschnitte ausgebildet ist.

Insbesondere kann mit den Softwarecodeabschnitten das Verfahren wie oben beschrieben ausgeführt werden, wenn die Softwarecodeabschnitte von den Verarbeitungseinheiten des Cloud-Computing-Systems ausgeführt werden.

Nach einem weiteren Aspekt der Erfindung wird ein Datenverarbeitungssystem zur Ausführung eines Datenverarbeitungsprogramms vorgeschlagen, welches computerlesbare Programmbefehle umfasst, um ein Verfahren wie vorstehend beschrieben zum selektiven Bereitstellen und Anreichern von Daten auszuführen, wenigstens umfassend ein System wie vorstehend beschrieben.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Flussdiagramm für ein Verfahren zum selektiven Bereitstellen und Anreichern von Daten nach einem Ausführungsbeispiel der Erfindung;
- Fig. 2: eine Detaillierung des Schritts Definieren von Parametern des erfindungsgemäßen Verfahrens;
- Fig. 3: eine Detaillierung des Schritts Erzeugen von strukturierten Daten aus Rohdaten des erfindungsgemäßen Verfahrens;
- Fig. 4: eine Detaillierung des Schritts Bereitstellen von aufbereiteten Daten aus strukturierten Daten des erfindungsgemäßen Verfahrens;
- Fig. 5: eine Detaillierung des Schritts Erfassen von Feedbackdaten zu den aufbereiteten Daten des erfindungsgemäßen Verfahrens;
- Fig. 6: ein Systemdiagramm des Systems zum selektiven Bereitstellen und Anreichern von Daten nach einem Ausführungsbeispiel der Erfindung;
- Fig. 7: eine Darstellung der Funktion Vergleichsoperationen des zweiten Moduls des Systems nach Figur 6;
- Fig. 8: eine Darstellung der Funktion Textanalyse des zweiten Moduls des Systems nach Figur 6; und
- Fig. 9: eine Darstellung der Funktion Bewerten des zweiten Moduls des Systems nach Figur 6.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

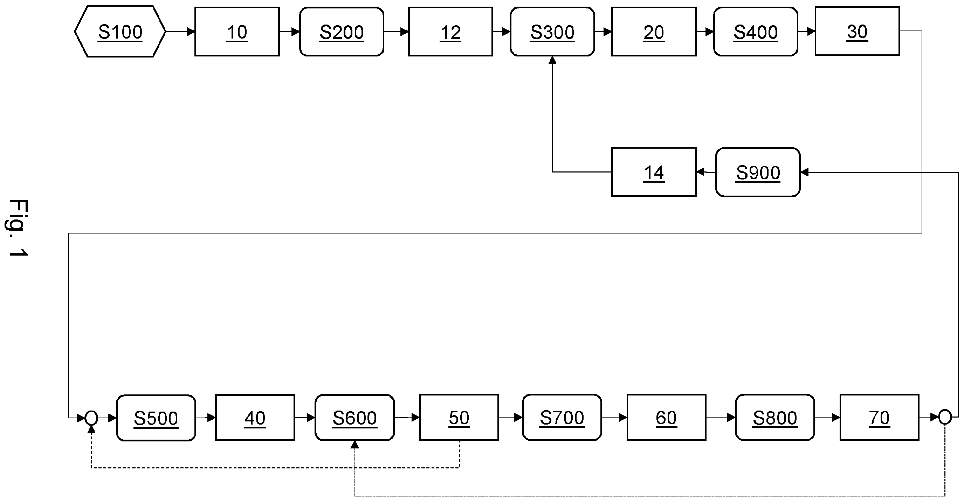

Figur 1 zeigt ein Flussdiagramm für das Verfahren zum selektiven Bereitstellen und Anreichern von Daten nach einem Ausführungsbeispiel der Erfindung.

Das computerimplementierte Verfahren zum selektiven Bereitstellen und Anreichern von Daten, insbesondere von Informationen zu definierten Interessensgebieten geht aus von Parametern 10, 12, 14 als Basis für eine Suche nach Daten.

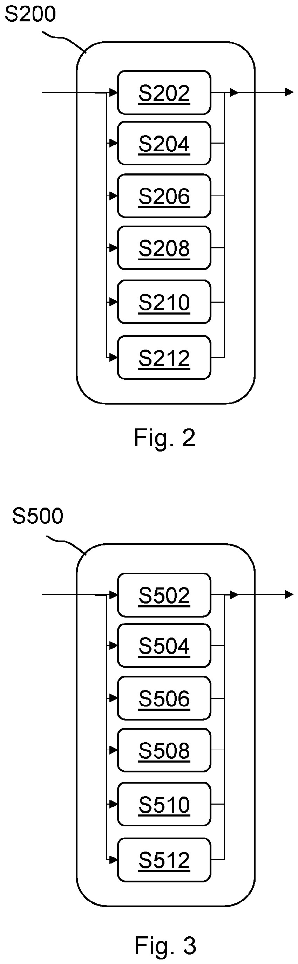

Nach dem initialen Beginn des Verfahrens in Schritt S100 sind die Parameter 10 zunächst noch variabel, bevor sie in Schritt S200 definiert werden. Details zu der Definition von Parametern in Schritt S200 sind später in Figur 2 erläutert.

Wenn die Parameter 12 zur Suche der Daten definiert sind, werden zum Bereitstellen der Daten zur weiteren Aufbereitung und Anreicherung eine Reihe von Schritten in einer kontinuierlich durchlaufenen Schleife ausgeführt.

In Schritt S300 wird ein Crawler 20 mit jeweils aktuellen Parametern 12, 14 trainiert. Der Crawler 20 kann dazu vorteilhaft auf wenigstens einer Methode maschinellen Lernens, insbesondere einer Methode von wenigsten einem Neuronalen Netz, einem Entscheidungsbaum, Support Vector Machines basieren.

In Schritt S400 werden mittels des Crawlers 20 Rohdaten 30 bereitgestellt und strukturiert abgespeichert.

In Schritt S500 werden anhand von Verdichtungskriterien aus den Rohdaten 30 strukturierte Daten 40 bereitgestellt.

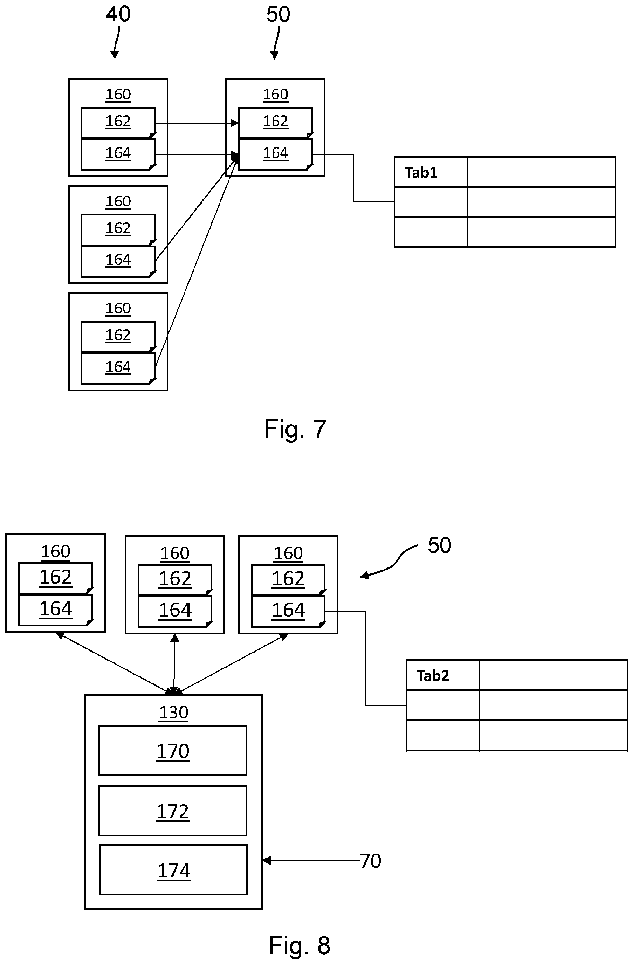

Die strukturierten Daten 40, wie in Figur 7 näher erläutert ist, umfassen dabei Datensätze 160, welche wenigstens einen Inhalt 162 und wenigstens ein Attribut 164 aufweisen. Die Attribute 164 können aus der Identifikation der Treffer der Datenbeschaffung (beispielsweise URL, Herkunft, Zeitpunkt, Format, etc.) oder aus den Metadaten des Inhalts (beispielsweise Thema, Autor, Schlüsselwort, etc.) befüllt sein. Der Inhalt 162 kann aus Text und ggf. aus Bildern oder Videos bestehen. Mehrfach (z.B. über unterschiedliche Portale) veröffentlichte Artikel können redundant vorhanden sein. Gegebenenfalls sind semantisch gleiche Artikel textuell unterschiedlich (gekürzt, ergänzt, etc.).

In Schritt S600 werden anhand von Aufbereitungskriterien aus den strukturierten Daten 40 aufbereitete Daten 50 bereitgestellt, die dann in Schritt S700 in einer Nutzerdatenbank 60 abgelegt werden.

In Schritt S800 werden anhand von Feedback-Kriterien Feedbackdaten 70 zu den aufbereiteten Daten 50 erfasst, welche in Schritt S900 anhand der Feedbackdaten 70 zum Erstellen von aktualisierten Parametern 14 genutzt werden.

Mit diesen aktualisierten Parametern 14 wird der Crawler 20 in Schritt S300 dann wieder trainiert, um die Schleife erneut zu durchlaufen.

Die kontinuierlich durchlaufene Schleife zum Bereitstellen der Daten mit den Schritten Trainieren S300 eines Crawlers 20, Bereitstellen S400 von Rohdaten 30, Erzeugen S500 von strukturierten Daten 40, Bereitstellen S600 von aufbereiteten Daten 50, Ablegen S700 der aufbereiteten Daten 50, Erfassen S800 von Feedbackdaten 70, Erstellen S900 aktualisierter Parameter 14 kann bevorzugt automatisiert durchlaufen werden.

Das Gewinnen von wenigstens einem der Kriterien Verdichtungskriterium, Aufbereitungskriterium, Feedback-Kriterium kann ebenfalls bevorzugt wenigstens teilweise automatisiert durchgeführt werden. Zum Erfassen S800 von Feedbackdaten 70 kann jedoch auch eine Eingabeaufforderung ausgelöst werden, um Feedback zu den präsentierten Daten manuell eingeben zu können.

Die Aufbereitungskriterien können mit den Feedbackdaten 70 aktualisiert werden, sodass beim nächsten Durchlaufen des Schrittes S600 zum Aufbereiten von strukturierten Daten 40 aktualisierte Aufbereitungskriterien verwendet werden können.

Die aufbereiteten Daten 50 können beim Erzeugen strukturierter Daten 40 mit neuen Rohdaten 30 verknüpft werden, welche dann in Schritt S500 als aktualisierte strukturierte Daten 40 bereitgestellt werden können.

Das in Figur 1 dargestellte Verfahren kann vorteilhaft in einem Computer-Programm-Produkt zum selektiven Bereitstellen und Anreichern von Daten implementiert sein, wobei das Computer-Programm-Produkt wenigstens ein computerlesbares Speichermedium umfasst, welches Programmbefehle umfasst, die auf einem Computersystem ausführbar sind und das Computersystem dazu veranlassen, ein solches Verfahren auszuführen.

Weiter kann das Verfahren vorteilhaft in einem Datenverarbeitungssystem zur Ausführung eines Datenverarbeitungsprogramms implementiert sein, welches computerlesbare Programmbefehle umfasst, um ein solches Verfahren zum selektiven Bereitstellen und Anreichern von Daten auszuführen.

In Figur 2 ist eine Detaillierung des Schritts S200 Definieren von Parametern des erfindungsgemäßen Verfahrens dargestellt.

Dazu kann, wie in Figur 2 dargestellt, wenigstens einer der folgenden Schritte ausgeführt werden.

In Schritt S202 kann ein Interessensgebiet festgelegt werden. Dazu wird das fachliche Gebiet, zu dem Informationen bereitgestellt werden sollen, definiert. Es kann bedarfsweise eine Eingrenzung durch Ausschluss von dezidiert nicht relevanten Aspekten erfolgen.

In Schritt S204 kann wenigstens ein Schlüsselwort festgelegt werden. Die Schlüsselworte zum Interessensgebiet, nach denen gesucht werden soll, werden definiert. Die Schlüsselworte können durch logische Operatoren, wie OR, AND, NOT, etc. ergänzt und/oder verknüpft werden. Weitere Merkmale, wie zum Beispiel die Konstellation der Schlüsselworte im Text, können hinzugefügt werden.

In Schritt S206 kann wenigstens eine Quellenart festgelegt werden. Es kann festgelegt werden, welche Quellen genutzt werden sollen. Weiter kann die nationale Herkunft, Sprache(n), Art der Quelle (z.B. Nachrichtenagentur, Universität, Fachforum, Unternehmen, etc.) festgelegt werden. Es kann bestimmt werden, welche Art von Information wie ausgewertet und ggf. umgewandelt werden soll (z.B. Text, Bild, Ton, Video als Quellen und ggf. durch Texterkennung aus Bild oder Spracherkennung aus Audio / Video zum Text). Dateiformate bei Quellen können festgelegt werden.

In Schritt S208 kann wenigstens ein Attribut festgelegt werden. Es kann festgelegt werden, welche Attribute zu den Informationen erfasst und angezeigt werden sollen. Dies können zum Beispiel Attribute wie Neuheit, Anzahl der Veröffentlichungen, Dauer der Veröffentlichungen zu einem Thema, Länder der Veröffentlichungen, Quelltypen, Feedbackinformationen, etc. sein. Es sind jedoch nur Attribute möglich, die sich aus der Auswertung der Quellen, der Information selbst, dem Abgleich mit bereits erfassten Informationen oder dem Feedback befüllen lassen.

In Schritt S210 kann wenigstens ein Zeitpunkt und/oder wenigstens ein Turnus festgelegt werden. Dabei kann beispielsweise festgelegt werden, ab wann und wie oft (z.B. live, in einer Turnusabfrage, durch manuellen Trigger, etc.) nach Informationen gesucht werden soll und zu welchen Zeitpunkten die Aufbereitung und Bereitstellung der Informationen erfolgen soll.

In Schritt S212 kann wenigstens eine Zieladresse und/oder wenigstens ein Datenraum festgelegt werden. Dabei kann festgelegt werden, wie die Ergebnisse an welche Zielstruktur übertragen werden sollen. In der Zielstruktur können zweckmäßigerweise Informationen und Attribute hinzugefügt und aktualisiert werden. Zugleich kann die für das Feedback notwendige Übermittlung definiert und eingerichtet werden. Als geeignete Zielarchitektur für den strukturierten Datenaustausch, Kommunikation (intern und extern) und Feedback kann zum Beispiel ein Kommunikationswerkzeug wie Microsoft Teams dienen, da hier auch die Möglichkeit besteht, zusätzliche Applikationen zu integrieren.

In Figur 3 ist eine Detaillierung des Schritts S500 Erzeugen von strukturierten Daten 40 aus Rohdaten 30 des erfindungsgemäßen Verfahrens dargestellt.

Zum Erzeugen S500 von strukturierten Daten 40 aus den Rohdaten 30 anhand von Verdichtungskriterien kann wenigstens einer der folgenden Schritte ausgeführt werden.

Zum Erkennen von Häufungen der Rohdaten 30 kann im Schritt S502 auf Basis einer Textanalyse ermittelt werden, ob eine Meldung über mehrere Kanäle verbreitet wird, beispielsweise, ob die Information nur aus einer Quelle stammt, oder ob diese bereits über mehrere Quellen bereitgestellt wird. Es kann eine Auswertung der Häufungen nach Anzahl und Herkunft erfolgen. Die Auswertungsergebnisse können in die Attributierung transferiert werden.

Weiter kann im Schritt S504 eine Auflösung der Redundanz inhaltsgleicher Informationen erfolgen. Gleiche Meldungen werden also nicht mehrfach an den Empfängerkreis übermittelt, sondern nur einmal, dafür allerdings versehen mit den Attributen 164 aus der Auswertung von Häufungen. Die Auflösung der Redundanzen kann im Ergebnistyp über die Erzeugung eines neuen Textblocks auf Basis der Textauswertung erfolgen. Verfahrensseitig können also Informationen, die über ein Crawling gefunden werden, in neue Dateien (Text) konvertiert und dabei auch die Möglichkeiten der maschinellen Übersetzung und der Text aus Bild Auswertung genutzt werden.

Vorteilhaft können dann in Schritt S506 für den Nutzer sichtbare Attribute 164 befüllt werden.

Weiter können in Schritt S508 intern benötigte, aber für den Nutzer nicht sichtbare, Metadaten zugeordnet werden.

Inhaltlich in Beziehung stehende Themen können in Schritt S510 auf Verwandtschaften analysiert und detektiert werden. Dies kann über Schlüsselworte im Sinne von Kategorien oder Eigennamen von Technologie oder Produkten erfolgen. Hier kann auch der Einbezug von aufbereiteten Daten von Bedeutung sein, da auch über den Zeitverlauf eine Zugehörigkeit erkannt werden kann.

Vorteilhaft kann dann in Schritt S512 festgelegt werden, an welchen Ort in einer Zielstruktur die Information auf Grund ihrer Eigenschaften (Attribute 164 und Metadaten) transportiert werden soll.

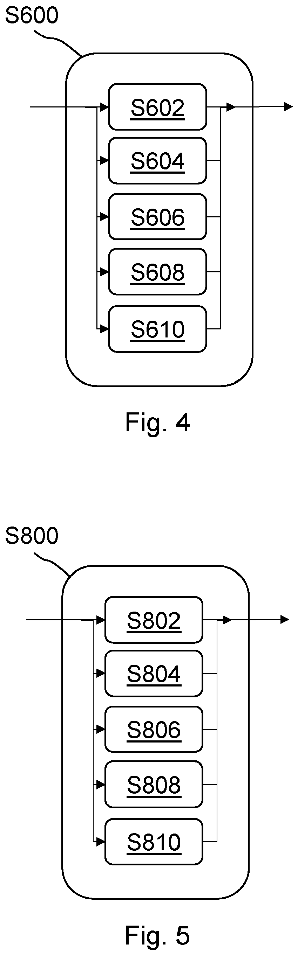

In Figur 4 ist eine Detaillierung des Schritts S600 Bereitstellen von aufbereiteten Daten 50 aus strukturierten Daten 40 des erfindungsgemäßen Verfahrens dargestellt.

Zum Bereitstellen S600 von aufbereiteten Daten 50 aus den strukturierten Daten 40 kann wenigstens einer der Schritte ausgeführt werden.

Vorteilhaft können in Schritt S602 die beschafften Daten 40 an eine Zielstruktur übermittelt werden.

Sodann kann in Schritt S604 eine Beziehung von Informationen innerhalb der Zielstruktur aktualisiert werden.

In Schritt S606 kann eine Zusammenfassung mit Informationen, welche Informationen mit den wesentlichen Attributwerten neu hinzugekommen sind und wie sich bestehende Attributwerte verändert haben, erzeugt werden.

Optional kann in Schritt S608, falls die Information innerhalb der Zielstruktur, wann zuletzt aktualisiert wurde, nicht ausreichend ist, eine Push-Nachricht an die Mitglieder der Gruppe übermittelt werden.

Schließlich können in Schritt S610 die Attribute 164 in den aufbereiteten Daten aktualisiert werden mit den Werten aus den neu erhobenen Daten. Dies kann dazu führen, dass bereits bekannte Informationen (aufbereitete Daten) nicht erneut übertragen werden (Redundanzvermeidung), sondern ggf. nur Attributwerte aktualisiert werden. Beispielsweise wurde bei der letzten Datenübermittlung eine Information bereits übertragen, sodass in dem Attributwert "Anzahl Quellen" "1" eingetragen war, da diese Information zu diesem Zeitpunkt nur von einer Quelle veröffentlicht war. Mittlerweile ist die Information auch aus anderen Quellen verfügbar, deshalb kann eine Änderung des Attributwerts nun auf größer 1 erfolgen. Die Werte aus dem Feedback (Nutzerbewertung) können laufend aktualisiert werden. Die erhaltenen Feedbackdaten 70 können zweckmäßigerweise als Trigger für die Aktualisierung der Attribute 164 dienen.

In Figur 5 ist eine Detaillierung des Schritts S800 Erfassen von Feedbackdaten 70 zu den aufbereiteten Daten 50 des erfindungsgemäßen Verfahrens dargestellt.

Zum Erfassen S800 von Feedbackdaten 70 zu den aufbereiteten Daten 50 anhand von Feedbackkriterien kann wenigstens einer der Schritte ausgeführt werden.

Eine Bewertung der bereitgestellten Informationen kann in Schritt S802 vorteilhaft durch den Nutzer erfolgen. Die Bewertung kann zweckmäßigerweise durch vordefinierte Werte erfolgen und ggf. mit Freitext ergänzt werden.

In Schritt S804 kann durch den Nutzer eine Verwandtschaftsbeziehung vorgeschlagen werden. Der Vorschlag kann dann für die Konfiguration eines für die Beschaffung der Daten eingesetzten Crawlers 20 und die Optimierung des Beziehungsmodells genutzt werden.

Neue Such-Kriterien können in Schritt S806 durch den Nutzer vorgeschlagen werden. Der Vorschlag kann dann für die Konfiguration eines für die Beschaffung der Daten eingesetzten Crawlers 20 und die Optimierung des Beziehungsmodells genutzt werden.

In Schritt S808 können durch den Nutzer neue Quellenarten (z.B. Nachrichtenagenturen, Forschungsinstitute, neue Websites von Projekten, etc.) vorgeschlagen werden. Der Vorschlag kann dann für die Konfiguration eines für die Beschaffung der Daten eingesetzten Crawlers 20 und die Optimierung des Beziehungsmodells genutzt werden.

In Schritt S810 kann innerhalb der Zielstruktur interne Kommunikation zu den empfangenen Informationen angereichert werden. Als eine geeignete Applikation, welche einen strukturierten Informationsempfang und Kommunikation am gleichen Ort zulässt, kann beispielsweise eine Kommunikationssoftware wie Microsoft Teams eingesetzt werden.

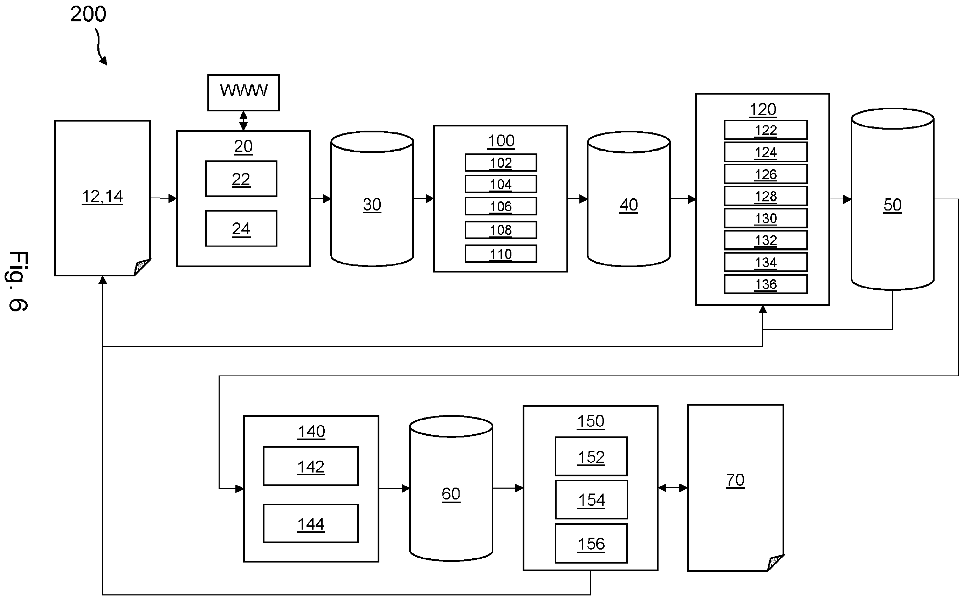

Figur 6 zeigt ein Systemdiagramm des Systems 200 zum selektiven Bereitstellen und Anreichern von Daten, insbesondere von Informationen zu definierten Interessensgebieten, nach einem Ausführungsbeispiel der Erfindung.

Parameter 12, 14 sind als Basis für die Suche nach Daten definiert. Das System 200 umfasst einen Crawler 20 zum Bereitstellen von Rohdaten 30 mittels jeweils aktueller Parameter 12, 14. Der Crawler 20 steht als Web Crawler 22 mit dem Word Wide Web WWW in Verbindung. Außerdem umfasst der Crawler 20 einen News Crawler 24, welcher beispielsweise Informationen aus Newslettern durchsucht und als Rohdaten 30 bereitstellt.

In einem ersten Modul 100 werden aus den Rohdaten 30 strukturierte Daten 40 extrahiert. Die strukturierten Daten 40 im zweiten Modul 120 umfassen Datensätze 160, welche wenigstens einen Inhalt 162 und wenigstens ein Attribut 164 aufweisen.

Das erste Modul 100 umfasst wenigstens eine Funktion 102 zum Durchführen einer Texterkennung. Weiter umfasst das Modul 100 eine Funktion 104 zum Durchführen einer Textanalyse, eine Funktion 106 zum Filtern von Daten, eine Funktion 108 zum Kombinieren von Datensätzen, sowie eine Funktion 110 zum Füllen von Attributen 164.

Nach Durchlaufen des ersten Moduls 100 stehen strukturierte Daten 40 bereit. In einem nächsten zweiten Modul 120 werden die strukturierten Daten 40 zu aufbereiteten Daten 50 weiterverarbeitet. Das zweite Modul 120 umfasst dazu wenigstens eine Funktion 122 zum Zählen eines Auftretens von Daten. Weiter umfasst das zweite Modul 120 eine Funktion 124 zum Verdichten von Daten, eine Funktion 126 zum Zuordnen von Beziehungen, eine Funktion 128 zum Bewerten von Daten, eine Funktion 130 zum Durchführen einer Textanalyse, eine Funktion 132 zum Festlegen von Schlüsselworte, eine Funktion 134 zum Durchführen von Vergleichsoperationen, sowie eine Funktion 136 zum Reduzieren von Daten.

Nach Durchlaufen des zweiten Moduls 120 stehen aufbereitete Daten 50 bereit. In einem dritten Modul 140 zum Ablegen der aufbereiteten Daten 50 in eine Nutzerdatenbank 60 werden in einer Funktion 142 neue Inhalte 162 von Datensätzen 160 gesendet, sowie in einer Funktion 144 neue Werte für Attribute 164. Die aufbereiteten Daten 50 werden in der Nutzerdatenbank 60 gespeichert.

In einem vierten Modul 150 Frontend werden Feedbackdaten 70 aus den aufbereiteten Daten 50 gewonnen und aktualisierte Parameter 14 anhand der Feedbackdaten 70 erstellt. Dazu umfasst das vierte Modul 150 wenigstens eine Funktion 152 zum Präsentieren der aufbereiteten Daten 50, sowie eine Funktion 154 zum Einholen von Feedback und eine Funktion 156 zum Senden von Botschaften.

Aktualisierte Parameter 14 werden wieder als Eingabe in den Crawler 20 eingespeist. Feedbackdaten 70 werden zur weiteren Verarbeitung und Aktualisierung in das zweite Modul 120 eingegeben und dienen zur verbesserten Weiterverarbeitung von strukturierten Daten 40 zu aufbereiteten Daten 50. Ebenso werden auch aufbereitete Daten 50 wieder in das zweite Modul 120 zurückgespeist, um so einen kontinuierlichen Aktualisierungsprozess beim Weiterverarbeiten von strukturierten Daten 40 zu ermöglichen.

Das in Figur 6 dargestellte System 200 zum selektiven Bereitstellen und Anreichern von Daten, insbesondere von Informationen zu definierten Interessensgebieten, kann vorteilhaft in einem Datenverarbeitungssystem implementiert sein, um bevorzugt ein Verfahren, wie in den Figuren 1 bis 5 beschrieben, in einem kontinuierlichen Prozess automatisch ausführen.

Figur 7 zeigt eine Darstellung der Funktion 134 mit Vergleichsoperationen des zweiten Moduls 120 des Systems 200 nach Figur 6.

Bereitgestellte Daten umfassen Datensätze 160 mit Inhalten 162 und Attributen 164, wie in der Figur am Beispiel von strukturierten Daten 40 dargestellt ist. Aufbereitete Daten 50 umfassen ebenso Datensätze 160 mit Inhalten 162 und Attributen 164.

In der Funktion 134 werden Inhalte 162 der Datensätze 160 aus den strukturierten Daten 40 mittels Abgleich und/oder Textanalyse verglichen und Gemeinsamkeiten in den Metadaten gesucht. Ergebnisse der Vergleichsoperationen werden in den Attributen 162 der Datensätze 160 der aufbereiteten Daten 50 abgelegt.

In einem weiteren Prozessschritt werden Redundanzen aufgelöst und die Attribute 164 aus den Datensätzen 160 zusammengeführt. Dabei wird nur der Inhalt 162 mit der höchsten Relevanz, was variabel definiert werden kann, behalten, die Attribute 164 jedoch in Form von Listen, Anzahl, Verteilung, etc. zusammengeführt. Die Anzahl der Treffer wird in einem weiteren Attribut 164 erfasst.

In der Figur sind Vergleichsoperationen an drei Datensätzen 160 der strukturierten Daten 40 dargestellt, welche dann in eine Verdichtung zu einem Datensatz 160 der aufbereiteten Daten 50 mündet. Beispielhafte Ergebnisse von Vergleichsoperationen sind in der folgenden Tabelle Tab1 der Attribute 164 dargestellt.

| **Attribut** | **Wert** |
|---|---|
| Anzahl Treffer | 3 |
| URLs | Example1.com; Example2.de; Example3.fr |
| Zeitraum | Von 20.03.2020 bis 03.04.2020 |
| Länder | DE, FR |
| Etc. | Etc. |

Es sind drei Treffer für die Inhalte 162 der Datensätze 160 erkannt worden. Dazu gibt es drei zugehörige URLs der gefundenen Information. Der Zeitraum der gefundenen Information reicht vom 20. März 2020 (20.03.2020) bis zum 3. April 2020 (03.04.2020). Die Information wurde in den Ländern Deutschland und Frankreich gefunden.

Figur 8 zeigt eine Darstellung der Funktion 130 Textanalyse des zweiten Moduls des Systems 200 nach Figur 6.

In diesem Prozessschritt können die konsolidierten Datensätze 160 der aufbereiteten Daten 50 auf Gemeinsamkeiten untersucht werden, die eine inhaltliche Beziehung wahrscheinlich machen. Hier zählt nicht die semantische Übereinstimmung des Inhalts, sondern die Übereinstimmung von einzelnen Begrifflichkeiten wie Erfinder, Firma, Technologie, etc.. Dafür kann vorteilhaft eine Textanalyse, basierend auf Methoden maschinellen Lernens, eingesetzt werden, die Füllwörter und Begriffe aus dem alltäglichen Sprachgebrauch können ignoriert werden und sich im Wesentlichen auf Substantive mit wahrscheinlicher Relevanz konzentriert werden. Im Ergebnis liegen nun zu den jeweiligen Datensätzen 160 Schlüsselworte vor, aus deren Übereinstimmungsgrad eine Beziehungswahrscheinlichkeit dargestellt und als weiteres Attribut 164 dem jeweiligen Datensatz 160 hinzugefügt werden kann. Vorschläge der Nutzer bezüglich Relation können dabei mit einer vorgegebenen Gewichtung in die Berechnung einbezogen werden. Dies gilt auch für ein negatives Feedback der Nutzer, d.h. eine berechnete Wahrscheinlichkeit kann auch reduziert werden.

In der Darstellung in der Figur wird die Funktion 130 Textanalyse auf drei Datensätze 160 angewandt. Die Funktion 130 umfasst eine Unterfunktion 170 Schlüsselworte zuordnen, eine Unterfunktion 172 Wahrscheinlichkeit berechnen, sowie eine Unterfunktion 174 Wahrscheinlichkeit ausgeben. In die Funktion 130 fließen aktuelle Werte für Beziehungen aus den Feedbackdaten 70 der vorigen Daten ein.

Ergebnisse der Textanalyse 130 werden in den Attributen 164 der Datensätze 160 abgelegt. Beispielhafte Werte für eine Textanalyse 130 sind der folgenden Tabelle Tab2 dargestellt.

| **Attribut** | **Wert(e)** |
|---|---|
| Anzahl Treffer | 3 |
| URLs | Example1.com; Example2.de; Example3.fr |
| Zeitraum | Von 20.03.2020 bis 03.04.2020 |
| Länder | DE, FR |
| Wahrscheinliche Beziehung (>60%) zu: | Datensatz XY |
| Schlüsselworte aus Textanalyse | Substantiv1, Substantiv2, Substantiv2,.... |
| Etc. | Etc. |

Die Attribute 164 des in Figur 7 dargestellten Datensatzes 160 sind nun um weitere Attribute 164 ergänzt. Es ist eine wahrscheinliche Beziehung (> 60 %) zu einem Datensatz XY gefunden worden. Schlüsselworte aus der Textanalyse sind mit Substantiv1, Substantiv2, Substantiv3 identifiziert.

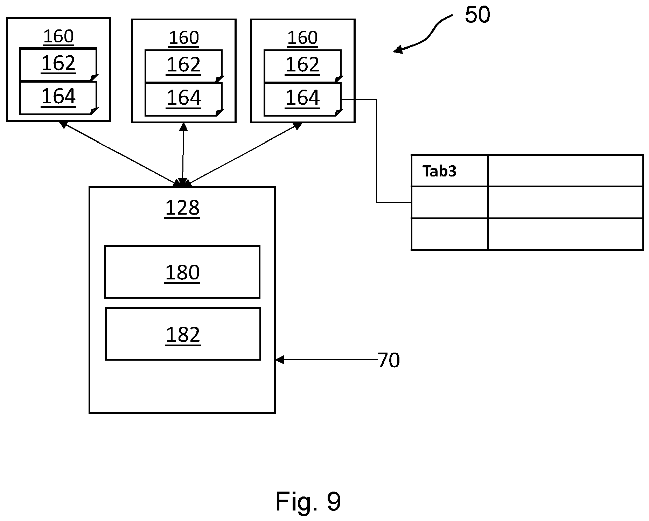

Figur 9 zeigt eine Darstellung der Funktion 128 Bewerten des zweiten Moduls des Systems 200 nach Figur 6.

In einem weiteren Prozessschritt kann eine Bewertung der Datensätze 160 durchgeführt werden. Dazu können unterschiedliche Analyseverfahren und Gewichtungsprioritäten genutzt werden. Derartige Verfahren, bzw. Algorithmen sind dem Fachmann aus dem Stand der Technik bekannt. Günstige Bewertungskriterien sind Vergleiche von Trefferzahlen, Anzahl von Treffern innerhalb eines Zeitraums, Übereinstimmungsquote mit den Suchbegriffen, etc. Das Feedback der Nutzer kann dabei vorzugsweise als Input für die Relevanzbewertung genutzt werden.

In der Darstellung in der Figur wird die Funktion 128 Bewerten auf drei Datensätze 160 angewandt. Die Funktion 128 umfasst eine Unterfunktion 180 Berechnung Bewertung, sowie eine Unterfunktion 182 Ausgabe Bewertung. In die Funktion 128 fließen aktuelle Werte für Bewertungen aus den Feedbackdaten 70 der vorigen Daten ein.

Ergebnisse der Funktion 128 Bewerten werden in den Attributen 164 der Datensätze 160 abgelegt. Beispielhafte Werte für eine Bewertung 128 sind der folgenden Tabelle Tab3 dargestellt.

| **Attribut** | **Wert(e)** |
|---|---|
| Anzahl Treffer | 3 |
| URLs | Example1.com; Examle2.de; Example3.fr |
| Zeitraum | Von 20.03.2020 bis 03.04.2020 |
| Länder | DE, FR |
| Wahrscheinliche Beziehung (>60%) zu: | Datensatz XY |
| Schlüsselworte aus Textanalyse | Substantiv1, Substantiv2, Substantiv2,.... |
| Relevanz | 67% |
| Aktualität | 23% |
| Etc. | Etc. |

Die Attribute 164 des in Figur 8 dargestellten Datensatzes 160 sind nun um weitere Attribute 164 ergänzt. Es ist eine Relevanz von 67 % bestimmt worden. Eine Aktualität ist mit 23 % bestimmt worden.

### Bezugszeichen

10 Parameter
   12 Parameter definiert
   14 Parameter aktualisiert
   20 Crawler
   22 Web Crawler
   24 News Crawler
   30 Rohdaten
   40 strukturierte Daten
   50 aufbereitete Daten
   60 Nutzerdatenbank
   70 Feedback-Daten
   100 erstes Modul Extraktion
   102 Texterkennung
   104 Textanalyse
   106 Filter
   108 Kombinieren
   110 Attribute füllen
   120 zweites Modul Aufbereiten
   122 Zähler
   124 Verdichten
   126 Beziehungen zuordnen
   128 Bewerten
   130 Textanalyse
   132 Schlüsselwort
   134 Vergleichen
   136 Reduzieren
   140 drittes Modul Datenablage
   142 neuen Inhalt senden
   144 neue Attribute senden
   150 viertes Modul Frontend
   152 Gegenwärtige Daten
   154 Feedback einholen
   156 Botschaft senden
   160 Datensatz
   162 Inhalt
   164 Attribut
   170 Schlüsselworte zuweisen
   172 Berechnung Wahrscheinlichkeit
   174 Ausgabe Wahrscheinlichkeit
   180 Berechnung Bewertung
   182 Ausgabe Bewertung
   200 System
S100 Start
S200 Definieren Parameter
   S202 Festlegen eines Interessensgebiets
   S204 Festlegen wenigstens eines Schlüsselworts
   S206 Festlegen wenigstens einer Quellenart
   S208 Festlegen wenigstens eines Attributs
   S210 Festlegen wenigstens eines Zeitpunkts und/oder wenigstens eines /Turnus
   S212 Festlegen wenigstens einer Zieladresse und/oder wenigstens eines /Datenraums
S300 Trainieren eines Crawlers
S400 Bereitstellen Rohdaten
S500 Erzeugen strukturierter Daten
   S502 Erkennen von Häufungen
   S504 Auflösen von Redundanzen
   S506 Füllen der Attribute
   S508 Zuordnen von Metadaten
   S510 Erkennen von Verwandtschaften
   S512 Festlegen wenigstens einer Zielstruktur
S600 Bereitstellen aufbereitete Daten
   S602 Übermitteln der Daten an die wenigstens eine Zielstruktur
   S604 Aktualisieren von Beziehungen
   S606 Erzeugen einer Zusammenfassung
   S608 Erzeugen einer Push-Nachricht
   S610 Aktualisieren der Attribute
S700 Daten ablegen
S800 Erfassen von Feedback-Daten
   S802 Bewerten von Daten, insbesondere Informationen
   S804 Vorschlagen von Verwandtschaften
   S806 Vorschlagen neuer Such-Kriterien
   S808 Vorschlagen neuer Quellenarten
   S810 Anreichern interner Kommunikation
S900 Erstellen aktualisierte Parameter

## Patentansprüche

1. Computerimplementiertes Verfahren zum selektiven Bereitstellen und Anreichern von Daten, insbesondere von Informationen zu definierten Interessensgebieten, wobei Parameter (10, 12, 14) als Basis für eine Suche nach Daten definiert werden, und
wobei zum Bereitstellen der Daten in einer kontinuierlich durchlaufenen Schleife wenigstens die Schritte ausgeführt werden
(i) Trainieren (S300) eines Crawlers (20) mit jeweils aktuellen Parametern (12, 14);
(ii) Bereitstellen (S400) von Rohdaten (30) mittels des Crawlers (20) und strukturiertes Abspeichern der Rohdaten (30);
(iii) Erzeugen (S500) von strukturierten Daten (40) aus den Rohdaten (30) anhand von Verdichtungskriterien;
(iv) Bereitstellen (S600) von aufbereiteten Daten (50) aus den strukturierten Daten (40) anhand von Aufbereitungskriterien;
(v) Ablegen (S700) der aufbereiteten Daten (50) in einer Nutzerdatenbank (60);
(vi) Erfassen (S800) von Feedbackdaten (70) zu den aufbereiteten Daten (50) anhand von Feedback-Kriterien;
(vii) Erstellen (S900) aktualisierter Parameter (14) anhand der Feedbackdaten (70).

2. Verfahren nach Anspruch 1, wobei die Aufbereitungskriterien mit den Feedbackdaten (70) aktualisiert werden.

3. Verfahren nach Anspruch 1 oder 2, wobei die aufbereiteten Daten (50) beim Erzeugen strukturierter Daten (40) mit neuen Rohdaten (30) verknüpft werden.

4. Verfahren nach einem der vorhergehenden Ansprüche, wobei die strukturierten Daten (40) Datensätze (160) umfassen, welche wenigstens einen Inhalt (162) und wenigstens ein Attribut (164) aufweisen.

5. Verfahren nach einem der vorhergehenden Ansprüche, wobei zum Definieren (S200) von Parametern (12, 14) für die Suche nach Daten wenigstens einer der Schritte ausgeführt wird
(i) Festlegen (S202) eines Interessensgebiets;
(ii) Festlegen (S204) wenigstens eines Schlüsselworts;
(iii) Festlegen (S206) wenigstens einer Quellenart;
(iv) Festlegen (S208) wenigstens eines Attributs (164);
(v) Festlegen (S210) wenigstens eines Zeitpunkts und/oder wenigstens eines Turnus;
(vi) Festlegen (S212) wenigstens einer Zieladresse und/oder wenigstens eines Datenraums.

6. Verfahren nach einem der vorhergehenden Ansprüche, wobei zum Erzeugen (S500) von strukturierten Daten (40) aus den Rohdaten (30) anhand von Verdichtungskriterien wenigstens einer der Schritte ausgeführt wird
(i) Erkennen (S502) von Häufungen;
(ii) Auflösen (S504) von Redundanzen;
(iii) Füllen (S506) der Attribute (164);
(iv) Zuordnen (S508) von Metadaten;
(v) Erkennen (S510) von Verwandtschaften;
(vi) Festlegen (S512) wenigstens einer Zielstruktur.

7. Verfahren nach einem der vorhergehenden Ansprüche, wobei zum Bereitstellen (S600) von aufbereiteten Daten (50) aus den strukturierten Daten (40) wenigstens einer der Schritte ausgeführt wird
(i) Übermitteln (S602) der Daten an die wenigstens eine Zielstruktur;
(ii) Aktualisieren (S604) von Beziehungen;
(iii) Erzeugen (S606) einer Zusammenfassung;
(iv) Erzeugen (S608) einer Push-Nachricht;
(v) Aktualisieren (S610) der Attribute (164).

8. Verfahren nach einem der vorhergehenden Ansprüche, wobei zum Erfassen (S800) von Feedbackdaten (70) zu den aufbereiteten Daten (50) anhand von Feedbackkriterien wenigstens einer der Schritte ausgeführt wird
(i) Bewerten (S802) von Daten, insbesondere Informationen;
(ii) Vorschlagen (S804) von Verwandtschaften;
(iii) Vorschlagen (S806) neuer Such-Kriterien;
(iv) Vorschlagen (S808) neuer Quellenarten;
(v) Anreichern (S810) interner Kommunikation.

9. Verfahren nach einem der vorhergehenden Ansprüche, wobei die kontinuierlich durchlaufene Schleife zum Bereitstellen der Daten mit den Schritten Trainieren (S300) eines Crawlers (20), Bereitstellen (S400) von Rohdaten (30), Erzeugen (S500) von strukturierten Daten (40), Bereitstellen (S600) von aufbereiteten Daten (50), Ablegen (S700) der aufbereiteten Daten (50), Erfassen (S800) von Feedbackdaten (70), Erstellen (S900) aktualisierter Parameter (14) automatisiert durchlaufen wird.

10. Verfahren nach einem der vorhergehenden Ansprüche, wobei das Gewinnen von wenigstens einem der Kriterien Verdichtungskriterium, Aufbereitungskriterium, Feedback-Kriterium wenigstens teilweise automatisiert durchgeführt wird.

11. Verfahren nach einem der vorhergehenden Ansprüche, wobei durch wenigstens einen der Schritte zum Erfassen (S800) von Feedbackdaten (70) eine Eingabeaufforderung ausgelöst wird.

12. Verfahren nach einem der vorhergehenden Ansprüche, wobei der Crawler (20) auf wenigstens einer Methode maschinellen Lernens, insbesondere einer Methode von wenigsten einem Neuronalen Netz, einem Entscheidungsbaum, Support Vector Machines basiert.

13. System (200) zum selektiven Bereitstellen und Anreichern von Daten, insbesondere von Informationen zu definierten Interessensgebieten, wobei Parameter (10, 12, 14) als Basis für eine Suche nach Daten definiert sind, wenigstens umfassend
(i) einen Crawler (20) zum Bereitstellen von Rohdaten (30) mittels jeweils aktueller Parameter (12, 14);
(ii) ein erstes Modul (100) zum Extrahieren von strukturierten Daten (40) aus den Rohdaten (30);
(iii) ein zweites Modul (120) zum Aufbereiten der strukturierten Daten (40) zu aufbereiteten Daten (50);
(iv) ein drittes Modul (140) zum Ablegen der aufbereiteten Daten (50) in eine Nutzerdatenbank (60);
(v) ein viertes Modul (150) zum Erfassen von Feedbackdaten (70) aus den aufbereiteten Daten (50) und Erstellen aktualisierter Parameter (14) anhand der Feedbackdaten (70).

14. System nach Anspruch 13, wobei die strukturierten Daten (40) im zweiten Modul (120) Datensätze (160) umfassen, welche wenigstens einen Inhalt (162) und wenigstens ein Attribut (164) aufweisen.

15. System nach Anspruch 13 oder 14, wobei das erste Modul (100) dazu ausgebildet ist, wenigstens die Funktionen auszuführen
(vi) Texterkennung durchführen (102);
(vii) Textanalyse durchführen (104);
(viii) Filtern von Daten (106);
(ix) Kombinieren von Datensätzen (108);
(x) Attribute (164) füllen (110).

16. System nach einem der Ansprüche 13 bis 15, wobei das zweite Modul (120) dazu ausgebildet ist, wenigstens die Funktionen auszuführen
(xi) Zählen eines Auftretens (122);
(xii) Verdichten von Daten (124);
(xiii) Zuordnen von Beziehungen (126);
(xiv) Bewerten von Daten (128);
(xv) Textanalyse durchführen (130);
(xvi) Schlüsselworte festlegen (132);
(xvii) Vergleichsoperationen durchführen (134);
(xviii) Reduzieren von Daten (136).

17. System nach einem der Ansprüche 13 bis 16, wobei das dritte Modul (140) dazu ausgebildet ist, wenigstens die Funktionen auszuführen
(xix) Neue Inhalte senden (142);
(xx) Neue Attribute (164) senden (144).

18. System nach einem der Ansprüche 13 bis 17, wobei das vierte Modul (150) dazu ausgebildet ist, wenigstens die Funktionen auszuführen
(xxi) Präsentieren (152);
(xxii) Feedback einholen (154);
(xxiii) Botschaft senden (156).

19. Computer-Programm-Produkt zum selektiven Bereitstellen und Anreichern von Daten, wobei das Computer-Programm-Produkt wenigstens ein computerlesbares Speichermedium umfasst, welches Programmbefehle umfasst, die auf einem Computersystem ausführbar sind und das Computersystem dazu veranlassen, ein Verfahren auszuführen, insbesondere nach wenigstens einem der Ansprüche 1 bis 12, wobei Parameter (10, 12, 14) als Basis für eine Suche nach Daten definiert werden, und
wobei zum Bereitstellen der Daten in einer kontinuierlich durchlaufenen Schleife wenigstens die Schritte ausgeführt werden
(i) Trainieren (S300) eines Crawlers (20) mit jeweils aktuellen Parametern (12, 14);
(ii) Bereitstellen (S400) von Rohdaten (30) mittels des Crawlers und strukturiertes Abspeichern der Rohdaten (30);
(iii) Erzeugen (S500) von strukturierten Daten (40) aus den Rohdaten (30) anhand von Verdichtungskriterien;
(iv) Bereitstellen (S600) von aufbereiteten Daten (50) aus den strukturierten Daten (40) anhand von Aufbereitungskriterien;
(v) Ablegen (S700) der aufbereiteten Daten (50) in einer Nutzerdatenbank (60);
(vi) Erfassen (S800) von Feedbackdaten (70) zu den aufbereiteten Daten (50) anhand von Feedback-Kriterien;
(vii) Erstellen (S900) aktualisierter Parameter (14) anhand der Feedbackdaten (70).

20. Datenverarbeitungssystem zur Ausführung eines Datenverarbeitungsprogramms, welches computerlesbare Programmbefehle umfasst, um ein Verfahren zum selektiven Bereitstellen und Anreichern von Daten, insbesondere nach wenigstens einem der Ansprüche 1 bis 12, auszuführen, wenigstens umfassend ein System (200) nach wenigstens einem der Ansprüche 13 bis 18.
